# EUROPEAN PATENT SPECIFICATION

(11) **EP 1 138 752 B1**
(45) Date of publication and mention of the grant of the patent: **22.02.2006**
(21) Application number: 01106336.9
(22) Date of filing: 15.03.2001
(51) Int. Cl.: C10M 159/18, C07F 11/00, C10N 10/12, C10N 30/06, C10N 40/25

(54) **Lubricant compositions comprising organic molydenum complexes**
Organische Molybdänkomplexe enthaltende Schmiermittelzusammensetzungen
Des compositions lubrifiantes contenant des complexes de molybdène

(30) Priority: 29.03.2000 EP 00201137
(43) Date of publication of application: 04.10.2001
(73) Proprietor: Infineum International Limited, Abingdon, Oxon OX13 6BB (GB)
(72) Inventor: McConnachie, Jonathan Martin, Flemington, NJ 08822 (US); Bell, Ian Alexander Weston, Oxfordshire, Oxfordshire OX13 5NG (GB); Brown, Alisdair James, Oxon, OX14 3GL (GB); Stiefel, Edward Ira, Bridgewater, NJ 08807 (US); Hill, Ernestine W., Piscataway, NJ 08854 (US)
(74) Representative: Mansell, Keith Rodney

(56) References cited:
- WO-A-98/26030
- WO-A-99/47629
- WO-A-99/66013
- US-A- 3 419 589
- US-A- 4 995 996
- US-A- 5 627 146
- US-A- 5 837 657
- US-A- 5 888 945

## Description

### FIELD OF THE INVENTION

The present invention relates to lubricating oil compositions and concentrates therefor containing metal core compounds, specifically polynuclear molybdenum core compounds.

### BACKGROUND OF THE INVENTION

Certain oil-soluble or oil-dispersible metal core compounds, ie compounds having a metal core bonded to one or more ligands, are known as additives (or additive components) for lubricating oil compositions (or lubricants) for improving the composition's properties and performance. The ligand or ligands confer oil-solubility on the compound. For example, certain oil-soluble molybdenum- and sulfur-containing compounds have been proposed and investigated as lubricant additives, US-A-2,951,040; - 3,419,589; -3,840,463; -4,966,719; - 4,995,996; and - 4,978,464 are representative of patent specifications describing molybdenum- and sulfur- containing compounds.

Molybdenum compounds for use as lubricant additives described in the art are principally dinuclear molybdenum compounds, characterised by the oxidation state Mo(V). See, for example, US-A-5,627,146. Also, EP-A-0 960 178, based on International Patent Application No. PCT IB97/01656, describes use of trinuclear molybdenum compounds as lubricant additives, i.e.
characterised by a different oxidation state (Mo(IV)).

WO 99/66013 discloses a lubricating oil composition comprising oil of lubricating viscosity and an additive comprising a metal core and bonded thereto one or more ligands capable of rendering the compound oil-soluble or oil-dispersible, at least one, and preferably all, of the ligand$ containing at least two hydrocarbyl groups of which one has 1 to 7 carbon atoms and the other or another has at least one more carbon atoms than the said hydrocarbyl group. This disclosure relates to asymmetric compounds which include both dinulclear and trinuclear molybdenum compounds.

WO 99/47629 discloses that certain properties of a lubricating oil composition, namely fuel economy and fuel economy retention, can be improved using a mixture of an overbased oil soluble calcium detergent and an oil soluble trinuclear molybdenum compound. The latter is represented by the formula Mo₃SₖLₙ, where k is 4 to 10, n is 1 to 4 and L represents an organic ligand having sufficient carbon atoms to render the molybdenum compound oil-soluble or oil-dispersible.

In the above-mentioned patents dinuclear molybdenum compounds may be exemplified by the formula Mo₂OₓS_{y}L₂, and trinuclear molybdenum compounds may be exemplified by the formula Mo₃SₖL₄, where x+y = 4, k is at least 4, and L represents a monoanionic ligand for conferring oil-solubility or oil-dispersability on the compound, a typical example being a dithiocarbamate, frequently referred to as "dtc".

The above-exemplified compounds have Mo: ligand (L) molar ratios of 1:1 and 3:4 respectively, ie the number of moles of Mo never exceeds the number of moles of ligand L. Since the Mo is an active part of the compound, it would be desirable to increase its proportion, relative to ligand L, in order to reduce the raw material cost of making the compounds. The art does not describe any such accomplishment, even though it would be beneficial to do so.

The present invention solves the above problem and provides oil-soluble or - dispersible compounds with polynuclear Mo cores whose Mo content exceeds its solubility or dispersibility conferring ligand content.

### Summary of the Invention

In a first aspect, the invention is a lubricating oil composition comprising, or made by mixing, a major amount of an oil of lubricating viscosity and a minor amount of, as an additive, at least one compound comprising a polynuclear, molybdenum core and bonded thereto one or more monoanionic ligands capable of rendering the compound oil-soluble or oil-dispersible and at least one anionic group bonded to the core, such anionic group being other than a ligand group that confers oil-solubility or oil-dispersibility on the compound,

the compound or compounds being represented by the general formula (I) below:

MoₐEₖLₙX_{b} (I)

wherein E represents O, Se or Se, or a combination thereof
L represents the monoanionic ligand;
X represents the anionic group bonded to the core;
a is 2, 3 or 4:
k is at least 4, for example in the range from 4 to 10, such as 4 to 7, preferably 4 or 7;
n is an integer that is less than a; and
b is an integer to confer, in combination with X electrical neutrality to the compound,
and wherein the combination of said at least one or more monoanionic ligands and said at least one anionic group confers electrical neutrality to the compound, wherein the ratio of the number of molybdenum atoms in the core to the number of said ligands is greater than 1:1, such as 3:2 or greater. The compound may provide at least 1, for example 1 to 2000, such as 5 to 1000, preferably 20 to 1000, ppm by mass of the Mo, expressed as Mo atoms, based on the mass of the composition.

Preferably, the molybdenum core, as a Mo cluster core comprising more than one Mo atom, is dinuclear or trinuclear. It may contain non-metallic atoms consisting wholly or partly of sulphur. Preferably it consists of trinuclear molybdenum and sulphur. The ligands or ligands may, for example, be bidentate ligands, e.g. bonding to the core through two sulphur atoms.

The lubricating oil composition according to the first aspect of the invention has excellent antiwear, antioxidant, and friction-reducing properties; also it may be compatible with other additives used In formulating commercial lubricating oil compositions and can be made from readily available starting materials.

In a second aspect, the invention is an additive concentrate for blending with an oil of lubricating viscosity comprising, or made by mixing, an oleaginous carrier and from 1 to 200,000, for example 50 to 150,00, such as 50 to 100,000, ppm by mass of the Mo, expressed as Mo atoms, of an additive defined in the first aspect of the invention, based on the mass of the concentrate.

In a third aspect, the invention is a method of lubricating an internal combustion engine comprising operating the engine and lubricating the engine with a lubricating oil composition of the first aspect of the invention.

In a fourth aspect, the invention is use of an additive as defined in the first aspect of the invention for enhancing one or more lubricating oil properties of a lubricating oil composition.

In a fifth aspect, the invention is a method of making a lubricating oil composition or an additive concentrate comprising mixing an additive defined in the first aspect of the invention with an oil of lubricating viscosity or an oleaginous carrier.

In this specification:
"comprising" or any cognate word is taken to specify the presence of stated features, integers, steps or components, but does not preclude the presence or addition of one or more other features, integers, steps, components or groups thereof;
"major amount" means in excess of 50 mass % of the composition;
"minor amount" means less than 50 mass % of the composition, both in respect of the stated additive and in respect of the total mass % of all of the additives present in the composition, reckoned as active ingredient of the additive or additives;
   the invention also provides the product obtained or obtainable as a result of any reaction between the various additive components of the composition or concentrates, essential as well as customary and optimal, under the conditions of formulation, storage or use;
"oil-soluble" or "dispersible" used herein do not necessarily indicate that the compounds or additives are soluble, dissolvable, miscible, or capable of being suspended in the oil in all proportions. These do mean, however, that they are, for instance, soluble or stably dispersible in oil to an extent sufficient to exert their intended effect in the environment in which the oil is employed. Moreover, the additional incorporation of other additives may also permit incorporation of higher levels of a particular additive, if desired.

### Detailed Description of the Invention

### • OIL OF LUBRICATING COMPOSITION

This oil may be selected from vegetable, animal, mineral, or synthetic oils. The oils may range in viscosity from light distillate mineral oils to heavy lubricating oils such as gas engine oil, mineral lubricating oil, motor vehicle oil, and heavy duty diesel oil. The oils may be unrefined, refined, and re-refined. The oil may be used oil.

The ligands, including ligands L, may be independently selected from the group of:

―X―R

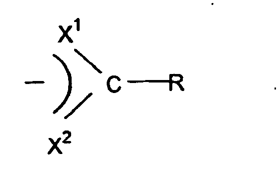

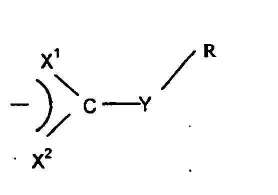

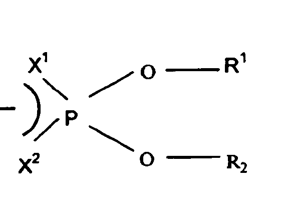

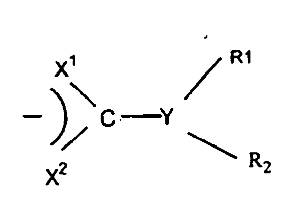

or 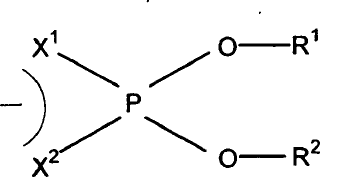
and mixtures thereof, and perthio derivatives thereof wherein X, X₁, X₂ and Y are independently selected from the group of oxygen and sulfur, and wherein R₁, R₂, and R are independently selected from the group consisting of H and organo groups that may be the same or different. Preferably the organo groups are hydrocarbyl groups such as alkyl (e.g., in which the carbon atom attached to the remainder of the ligand is primary, secondary or tertiary), aryl, substituted aryl and ether groups. More preferably, all ligands are the same.

Importantly, the organo groups of the ligands have a sufficient number of carbon atoms to render the compounds soluble or dispersible in the oil. The compounds' oil solubility or dispersibility may be influenced by the number of carbon atoms in the ligands. Preferably the ligand source chosen has a sufficient number of carbon atoms to render the compound soluble or dispersible in the oil. In the compounds in the present invention, the total number of carbon atoms present among all of the organo groups of the compounds' ligands typically will be at least 21, e.g. 21 to 800, such as at least 25, at least 30 or at least 35. For example, the number of carbon atoms in each alkyl group will generally range between I to 100, preferably I to 40 and more preferably between 3 and 20. Preferred ligands include dialkyldithiophosphate ("ddp"), xanthates, thioxanthates, dialkylphosphate, dialkyldithiocarbamate ("dtc"), and carboxylate and of these the dtc is more preferred.

The term "hydrocarbyl" denotes a substituent having carbon atoms directly attached to the remainder of the ligand and which is predominantly hydrocarbyl in character within the context of this invention. Such substituents include the following: (1) hydrocarbon substituents, that is, aliphatic (for example alkyl or alkenyl), alicyclic (for example cycloalkyl or cycloalkenyl) substituents, aromatic-, aliphatic- and alicyclic-substituted aromatic nuclei, as well as cyclic substituents wherein the ring is completed through another portion of the ligand (that is, any two indicated substituents may together form an alicyclic group); (2) substituted hydrocarbon substituents, that is, those containing nonhydrocarbon groups which, in the context of this invention, do not alter the predominantly hydrocarbyl character of the substituent. Those skilled in the art will be aware of suitable groups (e.g., halo, (especially chloro and fluoro), amino, alkoxyl, mercapto, alkylmercapto, nitro, nitroso, sulfoxy, etc.); (3) hetero substituents, that is, substituents which, while predominantly hydrocarbon in character within the context of this invention, contain atoms other than carbon present in a chain or ring otherwise composed of carbon atoms.

Preferred embodiments of compounds of formula (I) are those where E represents O or S or a combination thereof; and/or a is 2 or 3.

A more preferred embodiment is a compound of the general formula (II) below:

Mo₃SₖL₂X

where k is 4 or 7 and X (II) represents a divalent anion such as the disulfide ion.

The subject compounds may be made by reacting, in a polar medium, a reactant molybdenum compound that contains a polynuclear molybdenum core, such as a trinuclear molybdenum core, and the ligand, L, such as a dithiocarbamate, in a stoichiometric ratio, corresponding to that of the subject compound, wherein neither the reactant molybdenum compound nor the ligand is derivatised.

The polar medium may, for example, comprise a liquid alkanol such as methanol, tetrahydrofuran, dimethylformamide, toluene or water; the reactant molybdenum compound may, for example, contain the [Mo₃S₁₃]²⁻ ion; and L may, for example, be a dihydrocarbyl-, preferably dialkyl-, substituted dithiocarbamate. Appropriately, the above-described reaction is conducted at elevated temperature.

By "stoichiometric ratio" above is not intended to mean or require exact stoiochiometry according to a chemical equation that can be written to represent the reaction, but rather close enough to the stoiochiometry of such equation to ensure that there is more Mo than ligand, L, in the product (mole: mole).

As an example, the synthesis of Mo₃S₇(dtc)₂ (S₂), being a subject compound, may proceed with stoichiometric quantities of dtc according to the equation shown below:

(NH₄)₂Mo₃S₁₃ + 2Hdtc → Mo₃S₇(dtc)₂(S₂) + 2H₂S₂ + 2NH₃

### COMPOSITION AND CONCENTRATE

The lubricating oil compositions of the present invention may be prepared by adding to an oil of lubricating viscosity a mixture of an effective minor amount of at least one compound, and, if necessary, one or more co-additives such as described hereinafter. This preparation may be accomplished by adding the compound directly to the oil or by first mixing the compound in a suitable carrier fluid to achieve oil solubility or dispersibility, arid adding the mixture to the lubricating oil. Co-additives may be added to the oil by any method known to those skilled in the art, either prior to, contemporaneously with, or subsequent to addition of the compound.

Concentrates of the compounds and co-additives, if required, in a suitable oleagenous, typically hydrocarbon, carrier fluid provide a convenient means of handling them before their use. Oils of lubricating viscosity, such as those described above as well as aliphatic, naphthenic, and aromatic hydrocarbons, are examples of suitable carriers for concentrates. These concentrates may contain 1 to 90 mass % of the additives based on the weight of the concentrate; preferred is 1 to 50, more preferably 20 to 70, mass %.

The lubricating oil compositions made by mixing (or blending) an oil of lubricating viscosity containing at least one compound of the types and in the amounts described herein and optional co-additives may be used to lubricate mechanical engine components, particularly of an internal combustion engine such as a spark-ignited or compression-ignition engine, by adding the lubricating oil thereto in the crankcase thereof.

### CO-ADDITIVES

Other lubricant additives may be used for blending in the compositions of this invention. These include dispersants, detergents, e.g., single or mixed metal detergent systems, pour point depressants, viscosity improvers, antioxidants, surfactants, antiwear agents, and friction reducing agents. These can be combined in proportions known in the art. For example, additives containing phosphorus and/or sulfur compounds such as a zinc dialkyl dithiophosphate(ZDDP) can be prepared and used with the compounds of the present invention. However, the compounds of the present invention may be effective or may even possess improved properties when used in lubricating oil compositions that are free or substantially free of added phosphorus and/or sulfur. i.e., phosphorus and/or sulfur in addition to (i.e., except for) any phosphorus or sulfur contained in the compounds themselves. A lubricating oil composition that is substantial free of phosphorus and/or sulfur is one in which the amount of phosphorus and/or sulfur is not more than is inherently present in base oils of lubricating viscosity.

Particularly noteworthy is the use of anti-oxidants in combination with the compounds.

Examples of suitable antioxidants are selected from copper-containing antioxidants, sulfur-containing antioxidants, aromatic amine-containing antioxidants and phenolic antioxidants.

Examples of suitable copper-containing antioxidants include oil-soluble copper compounds described in EP-B-24 146, EP-A-280 579 and EP-A-280 580. Thus, for example, the copper may be blended into the oil as an oil-soluble copper salt of a synthetic or natural carboxylic acid. Examples of carboxylic acids from which suitable copper salts may be derived include C₂ to C₁₈ carboxylic acids (e.g., acetic acid, and fatty acids such as stearic acid and palmitic acid), unsaturated acids (e.g., oleic acid), branched carboxylic acids (e.g., naphthenic acids of molecular weight of from 200 to 500, neodecanoic acid and 2-ethylhexanoic acid), and alkyl- or alkenyl-substituted dicarboxylic acids (e.g., polyalkenyl-substituted succinic acids such as octadecenyl succinic acids, dodecenyl succinic acids and polyisobutenyl succinic acids). In some cases, suitable compounds may be derived from an acid anhydride, for example, from a substituted succinic anhydride. The copper antioxidant may be, for example, a copper dithiocarbamate or copper dithiophosphate. Other copper- and sulfur-containing antioxidant compounds, for example, copper mercaptides, xanthates, and thioxanthates, are also suitable for use in accordance with the invention, as are copper sulfonates, phenates (optionally sulfurized) and acetylacetonates. Other copper compounds which may be used in accordance with the invention are overbased copper compounds. Examples of such compounds, and of processes for their preparation, are described in US-A-4,664,822 and EP-A-0 425 367. The copper compound may be in cuprous or cupric form.

Examples of suitable aromatic amine-containing antioxidants are aromatic amines which have at least one aromatic group directly attached to at least one amine nitrogen atom. Secondary aromatic amines, especially those having two aromatic groups attached to the same amine nitrogen atom, are preferred, but the use of other aromatic amines is not excluded. The amines may contain one or more aromatic groups, for example at least two aromatic groups. Where there are two aromatic groups, both are preferably bonded directly to the same amine nitrogen. Compounds in which two aromatic groups are linked by a covalent bond or by an atom or group (e.g., an oxygen or sulfur atom, or a -CO-, -SO₂- or alkylene group) may be used. Aromatic rings, which are preferably aromatic hydrocarbon rings, may be unsubstituted or substituted by one or more substituents selected from alkyl, cycloalkyl, alkoxy, aryloxy, acyl, acylamino, hydroxy, and nitro groups. Amines containing alkyl-substituted aromatic hydrocarbon rings are preferred, especially those containing two alkylsubstituted phenyl groups. Preferred N-aryl amines for use in accordance with the invention are naphthylamines and, especially, diphenylamines, including alkyl substituted diphenylamines, wherein the alkyl group may be the same or different, having I to 28 carbon atoms. Other nitrogen- containing antioxidants, for example, phenothiazine type compounds, may also be used in this invention.

Examples of phenolic antioxidants include (a) sterically hindered tertiary-alkylated monohydric phenols such as those described in more detail in US-A-2,944,086; -3,043,775; and -3,211,652; and (b) methylene-bridged tertiary alkyl polyphenols, such as 4,4'-methylene bis (2,6-di-tertbutylphenol) and 2,2'-methylene bis (4,6-di-(1,1,2-trimethylpropyl)phenol), and mixtures of (a) and (b) such as those described in more detail in EP-B-0456925.

Examples of sulfur-containing antioxidants (compounds) are alkaline earth metal salts of alkylphenolthioesters having preferably C5 to C12 alkyl side chains, calcium nonylphenol sulfide, ashless oil-soluble phenates and sulfurized phenates, phosphosulfurized or sulfurized hydrocarbons, phosphorus esters and other sulfur-containing molybdenum-containing compounds. Other examples of sulfur-containing antioxidants are metal salts of dihydrocarbyl dithiophosphate or dihydrocarbyl dithiocarbamate compounds, wherein the metal is selected from Zn, Mn, Ni, Al, Group 1 metals and Group 2 metals. Other sulfur-containing compounds include those described in EP-A-699 759, for example, sulfides of oils, fats or polyolefins, in which a sulfur group having two or more sulfur atoms is adjoined and bonded together in a molecular structure. Examples include sulfurized sperm oil, sulfurized pinene oil, sulfurized soybean oil, sulfurized polyolefin, sulfurized esters, dialkyl disulfide, dialkyl polysulfide, dibenzyl disulfide, ditertiary butyl disulfide, polyolefin polysulfide, a thiadiazole type compound such as bis-alkyl polysulfide thiadiazole, and sulfurized phenol.

Preferable antioxidants are copper-containing antioxidants, aromatic amine-containing compounds including diphenylamines and derivatives thereof that have an effect herein comparable to diphenylamines), and mixtures thereof. Examples of copper-containing antioxidants include copper polyisobutylene succinic anhydride ("copper PIBSA") and copper oleate, and diphenylamines include all effective derivatives of diphenylamines.

Thus, the lubricating oil compositions of the present invention may include a minor amount of at least one antioxidant and at least one oil-soluble or oil-dispersible compound. The composition may include a mixture of the compounds and antioxidants of the types disclosed herein, the lubricating oil and/or other additives disclosed herein per se, and/or of any intermediates and reaction products occurring as a result of the mixture. In combination, the antioxidants and compounds are present in a minor effective amount to produce the enhanced lubricating performance, particularly friction reduction, friction reduction retention, antioxidancy and/or antiwear properties in the oil.

### EXAMPLES

The invention will be more fully understood by reference to the following examples.

### Example 1, Preparation of Mo₃S₇(octyl₂dtc)₂(S₂)

Methanol (50 mL), dioctylamine (0.66 mL, 2.2 mmol), and carbon disulfide (0.13 mL, 2.2 mmol) were combined in a 250 mL round bottomed flask under a nitrogen atmosphere and allowed to stir for 2 hours. (NH₄)₂Mo₃S₁₃ (750 mg, 1 mmol) was added and the mixture heated and refluxed overnight. The mixture, containing a red solid, was removed from the heat and the methanol decanted from the red solid. The solid was washed with methanol, dried, dissolved in toluene and filtered. The toluene was removed by vacuum distillation to yield a dark-red glassy solid product, whose elemental analysis corresponded to that of Mo₃S₇(octyl₂dtc)₂(S₂).

### Example 2, Preparation ofMo₃S₇(doco₂dtc)₂(S₂):

Methanol (50 mL), dicocoamine (1.00 g, 2.2 mmol), and carbon disulfide (0.13 mL, 2.2 mmol) were combined in a 250 mL round bottom flask under nitrogen and allowed to stir for 2 h. (NH₄)₂Mo₃S₁₃ (750 mg, 1 mmol) was added to the solution. The mixture was heated and refluxed overnight. The solution was removed from heat and the methanol decanted from the red solid. The solid was washed with methanol and then dried. The product was dissolved in toluene and filtered. The toluene was removed via vacuum distillation to yield a dark-red glassy solid.

### Test

The product of Example 2 was subjected to the Cameron-Plint test as follows.

It was added, as an additive, to a commercial 10W30 lubricating oil to provide 500 ppm by weight of elemental Mo. The mixture was heated at 80°C for 30 minutes with vigorous stirring to disperse the additive. The untreated oil and the additive-containing oil were then subject to the Cameron-Plint ball-on-plate test, which provides a measure of friction modification. The conditions of the test were:

| | |
|---|---|
| Load | 120N |
| Stroke | 2.42 cm |
| Temperature | 120°C |
| Rate | 8.3 Hz |

The length of the test was 30 minutes: the final friction coefficient was measured at the end of the test and the average friction coefficient recorded as the mean of the values between 10 and 30 minutes. The results obtained were as follows:

| | Final Friction Coefficient | Average Friction Coefficient |
|---|---|---|
| Untreated Oil | 0.10 | 0.11 |
| Treated Oil | 0.04 | 0.04 |

It is thus seen that treatment with the product of Example 1 reduced friction by more than half.

## Claims

1. A lubricating oil composition comprising, or made by mixing, a major amount of an oil of lubricating viscosity and a minor amount of, as an additive, at least one compound comprising a polynuclear, molybdenum core and bonded thereto one or more monoanionic ligands capable of rendering the compound oil-soluble or oil-dispersible and at least one anionic group bonded to the core, such anionic group being other than a ligand group that confers oil-solubilty or oil-dispersibility on the compound, the compound or compounds being represented by the general formula (I) below:
Moₐ Eₖ Lₙ X_{b} (I)
wherein E represents O,S or Se, or a combination therefof;
L represents the monoanionic ligand;
X represents the anionic group bonded to the core;
a is 2, 3 or 4:
k is at least 4, for example in the range from 4 to 10, such as 4 to 7, preferably 4 or 7;
n is an integer that is less than a; and
b is an integer to confer, in combination with X, electrical neutrality to the
compound, and wherein the combination of said at least one or more monoanionic ligands and said at least one anionic group confers electrical neutrality to the compound, wherein the ratio of the number of molybdenum atoms in the core to the number of said ligands is greater than 1:1, such as 3:2 or greater.

2. The composition of claim 1, wherein E represent O or S or a combination thereof, and/or a is 2 or 3.

3. The composition of claim 2, wherein the compound or compounds are represented by the general formula (II) below:
Mo₃SₖL₂X (II)
wherein L is defined as in claim 2, k is 4 or 7, and X represents a divalent anion such as the disulfide ion.

4. The composition of any preceding claim, wherein said ligand or ligands, including L, is or are represented by formulae 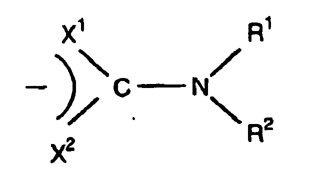
or 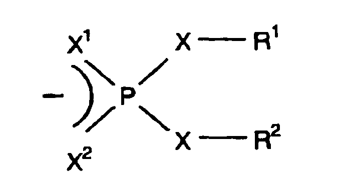
and mixtures thereof, and perthio derivatives thereof wherein X, X¹, X² and
Y are independently selected from the group of oxygen and sulfur, and wherein R¹ and R² independently represent hydrocarbyl groups.

5. The composition of claim 6, wherein the or said ligand or ligands is a dialkyldithiophosphate or a dialkyldithiocarbamate ligand.

6. The composition of any of the preceding claims, wherein the mass of molybdenum from the compound is at least 1, for example 1 to 2000, such as 5 to 1000, preferably 20 to 1000. ppm based on the mass of the composition.

7. The composition of any of the preceding claims, wherein the total number of carbon atoms In all of the ligands' is at least 21, such as 21 to 800.

8. The composition of any of the preceding claims, wherein the oil of lubricating viscosity is free of sulphur.

9. The composition of any of the preceding claims, further comprising, or made by mixing, at least one antioxidant additive.

10. The composition of any of the preceding claims, further comprising, or made by mixing, one or more dispersants, detergents, pour point depressants, viscosity improvers, surfactants and antiwear agents.

11. An additive concentrate for blending with an oil of lubricating viscosity comprising, or made by mixing, an oleaginous carrier and from 1 to 200,000 ppm by weight, for example 50 to 150,000 such as 50 to 100,000, ppm by mass of the molybdenum of an additive as defined in any of claims 1 to 8, based on the mass of the concentrate.

12. An additive concentrate of claim 11 further comprising, or made by mixing, at least one antioxidant additive, whereby the concentrate contains from 1 to 90, such as 1 to 50, mass percent of additives based on the mass of the concentrate.

13. A method of lubricating an internal combustion engine comprising operating the engine and lubricating the engine with a lubricating oil composition as claimed in any of claims 1 to 10.

14. The use of an additive or additives as defined in any of claims 1 to 10, for enhancing one or more lubricating properties of a lubricating oil composition.

## Revendications

1. Composition d'huile lubrifiante comprenant, ou préparée en mélangeant, une quantité principale d'une huile ayant une viscosité lubrifiante et une petite quantité, en tant qu'additif, d'au moins un composé comprenant un noyau de molybdène polynucléaire auquel est/sont lié(s) un ou plusieurs ligands monoanioniques capables de rendre le composé soluble dans l'huile ou dispersible dans l'huile et au moins un groupe anionique lié au noyau, un tel groupe anionique étant différent d'un groupe de ligand qui confère la solubilité dans l'huile ou la dispersibilité dans l'huile au composé, le composé ou les composés étant représenté(s) par la formule générale (I) suivante :
MoₐEₖLₙX_{b} (I)
dans laquelle
E représente O, S ou Se ou une combinaison de ceux-ci ;
L représente le ligand monoanionique ;
X représente le groupe anionique lié au noyau ;
a vaut 2, 3 ou 4 ;
k vaut au moins 4, par exemple dans la plage de 4 à 10, par exemple de 4 à 7, de préférence 4 ou 7 ;
n est un nombre entier qui est inférieur à a ; et
b est un nombre entier pour conférer, de façon combinée
avec X, la neutralité électrique au composé,
et dans laquelle la combinaison desdits au moins un ou plusieurs ligands monoanioniques et dudit groupe anionique, au nombre d'au moins un, confère la neutralité électrique au composé, le rapport du nombre d'atomes de molybdène dans le noyau au nombre desdits ligands étant supérieur à 1:1, par exemple de 3:2 ou plus.

2. Composition selon la revendication 1, dans laquelle E représente O ou S ou une combinaison de ceux-ci et/ou a vaut 2 ou 3.

3. Composition selon la revendication 2, dans laquelle le composé ou les composés est/sont représenté(s) par la formule générale (II) suivante :
Mo₃SₖL₂X (II)
dans laquelle L est défini comme dans la revendication 2, k vaut 4 ou 7, et X représente un anion divalent, par exemple l'ion dieulfure.

4. Composition selon l'une quelconque des revendications précédentes, dans laquelle ledit ligand ou lesdits ligands, comprenant L, est ou sont représentés par la formule 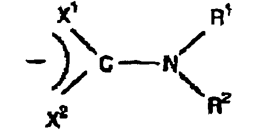
ou la formule 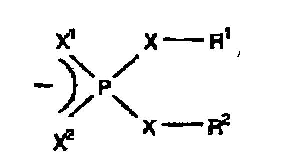
et des mélanges de ceux-ci, et des dérivés perthio de ceux-ci, dans lesquelles X, X¹, X² et Y sont choisis indépendamment dans l'ensemble constitué de l'oxygène et du soufre, et dans lesquelles R¹ et R² représentent indépendamment des groupes hydrocarbyle.

5. Composition selon la revendication 6, dans laquelle ledit ligand ou lesdits ligands est/sont un ligand dithiophosphate de dialkyle ou dithiocarbamate de dialkyle.

6. Composition selon l'une quelconque des revendications précédentes, dans laquelle le poids de molybdène provenant du composé est d'au moins 1, par exemple de 1 à 2000, par exemple de 5 à 1000, de préférence de 20 à 1000 ppm par rapport à la masse de la composition.

7. Composition selon l'une quelconque des revendications précédentes, dans laquelle le nombre total d'atomes de carbone dans tous les ligands est d'au moins 21, par exemple de 21 à 800.

8. Composition selon l'une quelconque des revendications précédentes, dans laquelle l'huile ayant une viscosité lubrifiante est exempte de soufre.

9. Composition selon l'une quelconque des revendications précédentes, comprenant en outre, ou préparée en mélangeant, au moins un additif antioxydant.

10. Composition selon l'une quelconque des revendications précédentes, comprenant en outre, ou préparée en mélangeant, un ou plusieurs dispersants, détergents, agents abaissant le point d'écoulement, agents améliorant la viscosité, agents tensioactifs et agents anti-usure.

11. Concentré d'additifs à mélanger avec une huile ayant une viscosité lubrifiante, comprenant, ou préparée en mélangeant, un véhicule oléagineux et de 1 à 200 000 ppm en poids, par exemple de 50 à 150 000, par exemple de 50 à 100 000 ppm en masse de molybdène d'un additif tel que défini dans l'une quelconque des revendications 1 à 8, par rapport à la masse du concentré.

12. Concentré d'additifs selon la revendication 11, comprenant en outre, ou préparée en mélangeant, au moins un additif antioxydant, moyennant quoi le concentré contient de 1 à 90, par exemple de 1 à 50 % en masse d'additifs par rapport à la masse du concentré.

13. Procédé de lubrification d'un moteur à combustion interne, comprenant la mise en marche du moteur et la lubrification du moteur avec une composition d'huile lubrifiante selon l'une quelconque des revendications 1 à 10.

14. Utilisation d'un additif ou d'additifs selon l'une quelconque des revendications 1 à 10 pour augmenter une ou plusieurs propriétés de lubrification d'une composition d'huile lubrifiante.

## Patentansprüche

1. Schmierölzusammensetzung, die eine größere Menge Öl mit Schmierviskosität und eine geringere Menge, als Additiv, von mindestens einer Verbindung umfasst oder durch Mischen hergestellt ist, welche einen mehrkernigen Molybdänkern und daran gebunden einen oder mehrere monoanionische Liganden, die die Verbindung öllöslich oder öldispergierbar machen können, und mindestens eine an den Kern gebundene anionische Gruppe umfasst, wobei diese anionische Gruppe von einer Ligandengruppe, die der Verbindung Öllöslichkeit oder Öldispergierbarkeit verleiht, verschieden ist, wobei die Verbindung oder Verbindungen durch die folgende allgemeine Formel (I) wiedergegeben werden:
MoₐEₖLₙX_{b} (I)
wobei E für O, S oder Se oder eine Kombination davon steht;
L für den monoanionischen Liganden steht;
X für die an den Kern gebundene anionische Gruppe steht;
a 2, 3 oder 4 ist;
k mindestens 4 ist, beispielsweise im Bereich von 4 bis 10, wie 4 bis 7, vorzugsweise 4 oder 7;
n eine ganze Zahl kleiner als a ist, und
b eine ganze Zahl ist, um der Verbindung in Kombination mit X elektrische Neutralität zu verleihen, und wobei die Kombination des mindestens einen oder der mehreren monoanionischen Liganden und der mindestens einen anionischen Gruppe der Verbindung elektrische Neutralität verleiht, wobei das Verhältnis der Anzahl der Molybdänätome in dem Kern zu der Anzahl der Liganden größer als 1:1 ist, wie 3:2 oder größer.

2. Zusammensetzung nach Anspruch 1, bei der E für O, S oder eine Kombination davon steht und/oder a 2 oder 3 ist.

3. Zusammensetzung nach Anspruch 2, bei der die Verbindung oder Verbindungen durch die folgende allgemeine Formel (II) wiedergegeben werden:
Mo₃SₖL₂X (II),
wobei L wie in Anspruch 2 definiert ist, k 4 oder 7 ist und X für ein zweiwertiges Anion wie das Disulfidion steht.

4. Zusammensetzung nach einem der vorhergehenden Ansprüche, bei der der Ligand oder die Liganden einschließlich L durch die Formeln 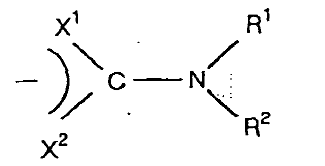
oder 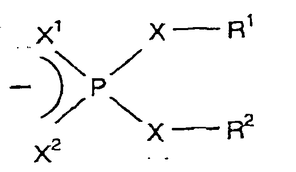
und Mischungen davon und Perthioderivate davon wiedergegeben wird bzw. werden, wobei X, X¹, X² und Y unabhängig ausgewählt sind aus der Gruppe von Sauerstoff und Schwefel, und wobei R¹ und R² unabhängig für Kohlenwasserstoffgruppen stehen.

5. Zusammensetzung nach Anspruch 4, bei der der oder dieser Ligand oder diese Liganden ein Dialkyldithiophosphat- oder Dialkyldithiocarbamatligand ist.

6. Zusammensetzung nach einem der vorhergehenden Ansprüche, bei der die Masse von Molybdän aus der Verbindung, bezogen auf die Masse der Zusammensetzung, mindestens 1, beispielsweise 1 bis 2000, wie 5 bis 1000, vorzugsweise 20 bis 1000 ppm ist.

7. Zusammensetzung nach einem der vorhergehenden Ansprüche, bei der die Gesamtanzahl der Kohlenstoffatome in allen der Liganden mindestens 21 beträgt, wie 21 bis 800.

8. Zusammensetzung nach einem der vorhergehenden Ansprüche, bei der das Öl mit Schmierviskosität schwefelfrei ist.

9. Zusammensetzung nach einem der vorhergehenden Ansprüche, die ferner mindestens ein Antioxidansadditiv umfasst bzw. durch Mischen damit hergestellt ist.

10. Zusammensetzung nach einem der vorhergehenden Ansprüche, die ferner ein oder mehrere Dispergiermittel, Detergentien, Stockpunktsenkungsmittel, Viskositätsverbesserer, Tenside und Antiverschleißmittel umfasst oder durch Mischen damit hergestellt ist.

11. Additivkonzentrat zum Mischen mit Öl mit Schmierviskosität, das ferner ölhaltigen oder ölartigen Träger und, bezogen auf die Masse des Konzentrats, 1 bis 200.000 Gew.ppm, beispielsweise 50 bis 150.000, wie 50 bis 100.000 Massen-ppm Molybdän von Additiv wie in einem der Ansprüche 1 bis 8 definiert umfasst oder durch Mischen damit hergestellt ist.

12. Additivkonzentrat nach Anspruch 11, das ferner mindestens ein Antioxidansadditiv umfasst oder durch Mischen damit hergestellt ist, wobei das Konzentrat, bezogen auf die Masse des Konzentrats, 1 bis 90, wie 1 bis 50 Massen% Additive enthält.

13. Verfahren zum Schmieren eines Verbrennungsmotors, das das Betreiben des Motors und Schmieren des Motors mit einer Schmierölzusammensetzung gemäß einem der Ansprüche 1 bis 10 umfasst.

14. Verwendung eines Additivs oder von Additiven wie in einem der Ansprüche 1 bis 10 definiert zur Verbesserung von einer oder mehreren Schmiereigenschaften von Schmierölzusammensetzung.
